Europäisches Patentamt

European Patent Office

Office européen des brevets

(19)

(11) **EP 0 663 790 B1**

(12) **EUROPÄISCHE PATENTSCHRIFT**

(45) Veröffentlichungstag und Bekanntmachung des
Hinweises auf die Patenterteilung:
**26.05.1999 Patentblatt 1999/21**

(51) Int Cl.⁶: **H05G 1/04**, H05G 1/54,
G01K 3/06

(21) Anmeldenummer: **95200025.5**

(22) Anmeldetag: **09.01.1995**

(54) **Röntgenstrahler mit einem Temperaturfühler**

X-ray emitter with a temperature sensor

Emetteur de rayons "X" à capteur de température

(84) Benannte Vertragsstaaten:
**DE FR GB NL**

(30) Priorität: **15.01.1994 DE 4401066**

(43) Veröffentlichungstag der Anmeldung:
**19.07.1995 Patentblatt 1995/29**

(73) Patentinhaber:
• **Philips Patentverwaltung GmbH
22335 Hamburg (DE)**
Benannte Vertragsstaaten:
**DE**
• **Koninklijke Philips Electronics N.V.
5621 BA Eindhoven (NL)**
Benannte Vertragsstaaten:
**FR GB NL**

(72) Erfinder: **Behling, Rolf
D-22846 Norderstedt (DE)**

(74) Vertreter: **Hartmann, Heinrich, Dipl.-Ing. et al
Philips Patentverwaltung GmbH,
Röntgenstrasse 24
22335 Hamburg (DE)**

(56) Entgegenhaltungen:
EP-A- 0 286 193          US-A- 2 914 594
US-A- 5 159 230

• **PATENT ABSTRACTS OF JAPAN Bd. 6, Nr. 87
(E-108) 25 Mai 1982 & JP-A-57 021 100 (TOSHIBA
CORP.) 03 Februar 1982**

**Beschreibung**

Die Erfindung betrifft einen Röntgenstrahler mit einem Gehäuse, einer darin angeordneten, von einem flüssigen Isoliermedium umgebenen Röntgenröhre und mit einem Temperaturfühler zur Bestimmung der Temperatur in dem flüssigen Isoliermedium. Der Temperaturfühler soll dabei insbesondere die Energiezufuhr zum Röntgenstrahler unterbrechen, wenn das Isoliermedium eine bestimmte mittlere Temperatur erreicht hat.

Bei einem aus dem Buch von D.R. Hill "Principles of Diagnostic X-Ray Apparatus" Philips Technical Library, S. 122/123 bekannten Röntgenstrahler wird die Tatsache ausgenutzt, daß das als Isoliermedium benutzte Öl sich bei einer Erwärmung ausdehnt und über eine Gummimembran einen Schaltkontakt betätigt. Diese Konstruktion ist mechanisch aufwendig und relativ ungenau.

Aufgabe der Erfindung ist es, einen Röntgenstrahler anzugeben, bei dem sich die Temperatur in dem Isoliermedium leichter ermitteln läßt. Diese Aufgabe wird ausgehend von einem Röntgenstrahler der eingangs genannten Art erfindungsgemäß dadurch gelöst, daß der Temperaturfühler einen Meßkörper, der mit einer räumlich ausgedehnten Zone im Isoliermedium thermischen Kontakt hat und im Betrieb des Röntgenstrahlers eine von der Temperaturverteilung in der Zone abhängige einheitliche Temperatur annimmt, und einen mit dem Meßkörper thermisch gekoppelten Temperaturwandler umfaßt, der ein von der Temperatur des Meßkörpers abhängiges elektrisches Signal erzeugt.

Die Erfindung geht davon aus, daß in dem Isoliermedium keine einheitliche Temperatur herrscht, sofern es nicht durch eine externe Pumpe umgewälzt wird. Das Isoliermedium ist wegen der thermischen Konvektion oben stets wärmer als unten. Berücksichtigt man dann zusätzlich noch, daß der Röntgenstrahler in unterschiedlichen Lagen betrieben wird, dann wird deutlich, daß die Temperatur des Isoliermediums nicht mit einem Sensor ermittelt werden kann, der die Temperatur lediglich an einem einzigen Punkt in dem Röntgenstrahler mißt. Bei der Erfindung wird von dem Temperaturwandler nicht unmittelbar die Temperatur des Isoliermediums gemessen, sondern die Temperatur eines Meßkörpers, der mit dem Isoliermedium thermischen Kontakt hat und der so ausgebildet ist, daß er eine von der Temperaturverteilung in der Zone des Isoliermediums, die mit ihm in Kontakt steht, abhängige einheitliche Temperatur annimmt.

Als Temperaturwandler kann insbesondere ein Thermoschalter verwendet werden, der bei Erreichen einer bestimmten Temperatur einen Schaltvorgang bewirkt (z.B. die Energiezufuhr unterbindet). Derartige Thermoschalter sind einfacher und arbeiten reproduzierbarer als ein durch die Ausdehnung einer Gummimembran betätigter Schalter.

Eine Weiterbildung der Erfindung sieht vor, daß der Meßkörper im Innern des Gehäuses angeordnet ist und mit dem Isoliermedium direkten thermischen Kontakt hat. Der Meßkörper kann grundsätzlich aber auch außerhalb des Gehäuses angeordnet sein, wenn er mit dem Gehäuse thermischen Kontakt hat, das seinerseits mit dem Isoliermedium in thermischem Kontakt steht.

Sofern die Wärmeleitung innerhalb des Meßkörpers im Vergleich zum Wärmeübergang von dem Isoliermedium in den Meßkörper hinein genügend groß ist, sind die Temperaturgradienten im Meßkörper klein. Die Wärme strömt dann solange in den Meßkörper hinein oder aus dem Meßkörper ins Isoliermedium zurück, bis sich im Meßkörper eine mittlere Temperatur eingestellt hat. Dies läßt sich durch einen genügend großen Querschnitt des Meßkörpers erreichen. Nach einer Weiterbildung der Erfindung kommt man aber mit einem kleineren Querschnitt aus, wenn der Meßkörper einen massiven Metallkörper umfaßt, dessen Oberfläche von einer thermisch isolierenden Hülle umschlossen ist. Diese Hülle kann beispielsweise aus Kunststoff bestehen.

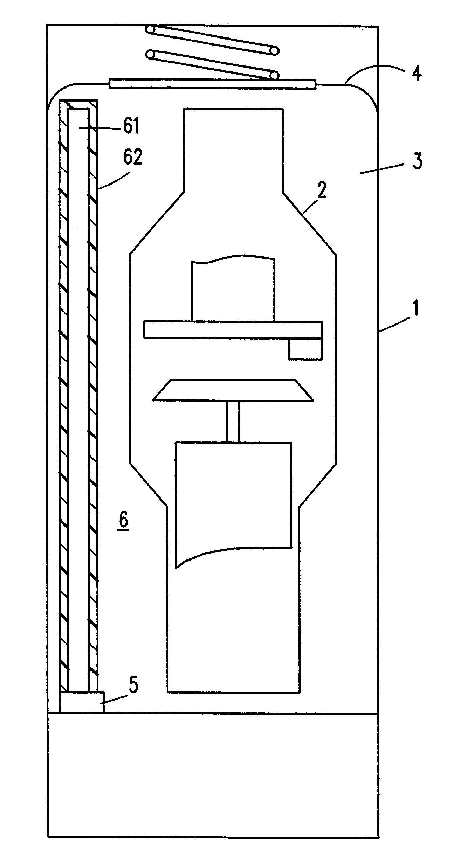

Die Erfindung wird nachstehend anhand eines in der Zeichnung dargestellten Ausführungsbeispiels näher erläutert.

Der Röntgenstrahler umfaßt ein annähernd zylinderförmiges Gehäuse 1, vorzugsweise aus Aluminium, und eine darin angeordnete Drehanoden-Röntgenröhre 2. Die Drehanoden-Röntgenröhre befindet sich in einem mit Öl als Isoliermedium gefüllten Raum 3, der auf mindestens einer Seite durch eine Gummimembran 4 abgeschlossen ist, die sich bei einer Erwärmung des Öls und dem sich verändernden Volumen des Raumes 3 anpaßt.

Der Röntgenstrahler kann in der in der Zeichnung dargestellten Position betrieben werden, bei der die Gummimenbran sich oberhalb der Röntgenröhre befindet, jedoch ist auch ein Betrieb in einer Stellung des Röntgenstrahlers möglich, in der sich die Gummimembran 4 unterhalb der Röntgenröhre befindet. In beiden Stellungen soll die Temperatur des Öls zuverlässig bestimmt und bei einer vorgegebenen Temperatur die Energiezufuhr zur Röntgenröhre unterbrochen werden. Das Öl in dem Raum 3 hat aber keine einheitliche Temperatur; durch thermische Konvektion ist das Öl oben wärmer als unten, wobei beispielsweise die Öltemperatur am unteren Ende des Raumes 3 65°C und am oberen Ende 85°C betragen kann.

Würde man die Temperatur beispielsweise mit einem im unteren Bereich des Raumes 3 angeordneten Temperaturfühler überwachen, dann würde dieser einen zu niedrigen Temperaturwert anzeigen, was zu einer zu starken Erhitzung des Öls führen könnte. Dies ließe sich zwar vermeiden, wenn die Energiezufuhr zur Röntgenröhre 2 schon bei einer niedrigeren Temperatur unterbrochen würde, doch würde dann in der um 180° gedrehten Stellung des Röntgenstrahlers der Temperaturfühler einen zu hohen Temperaturwert anzeigen, so daß die Energiezufuhr schon unterbrochen würde, bevor der Mittelwert der Öltemperatur seinen zulässigen Höchstwert erreicht hat. Die Leistungsfähigkeit des Röntgenstrahlers könnte auf diese Weise nicht voll ausgenutzt werden.

Um unabhängig von der Lage des Röntgenstrahlers messen zu können, ist ein Temperaturwandler 5, beispielsweise ein Thermokontakt vorgesehen, der mit einem Meßkörper 6 thermisch derart gekoppelt ist, daß er im wesentlichen nur die Temperatur des Meßkörpers, nicht aber die der lokalen übrigen Umgebung erfaßt. Der Meßkörper 6 erstreckt sich über die gesamte Länge des mit Öl gefüllten Raumes 3 und ist so ausgebildet, daß er über seine gesamte Länge eine im wesentlichen einheitliche Temperatur annimmt, die von der Temperaturverteilung in der Zone des Raumes 3 abhängt, die mit dem Meßkörper in Berührung steht. Genauer gesagt, soll die Differenz zwischen der Maximal- und der Minimaltemperatur im Innern des Meßkörpers klein sein im Vergleich zu der Differenz von Maximal- und Minimaltemperatur in der Umgebung des Meßkörpers. Abhängig von der zu erwartenden Form der Temperaturverteilung im Öl und dem gewählten Querschnitt des Meßkörpers ergeben sich zur Erzielung der gewünschten Homogenisierung unterschiedliche Auslegungen der Dicken von Isolierstoff und Meßkörper. Näherungsweise findet man für das Dämpfungsverhältnis D, das Verhältnis von maximaler Temperaturdifferenz im Meßfühler zu maximaler Temperaturdifferenz im Öl (sofern D genügend klein ist):

$$D = 0,1 * L * W * s^2$$

Dabei beschreiben L die Wärmeleitung durch die Isolation in den Meßkörper hinein pro Längeneinheit (Übergangswert Öl-Isolation vernachlässigt) und W den Wärmewiderstand innerhalb des Meßfühlers pro Längeneinheit. s ist die Gesamtlänge des Meßkörpers. Für einen gut wärmeleitenden Meßkörper mit kreisförmigem Querschnitt mit der spezifischen Wärmeleitung Lm, dem Durchmesser dm und einer relativ dünnen Beschichtung mit Isolationsmaterial der Dicke di und spezifischer Wärmeleitung Li gilt

$$W = 4 / (Lm * \pi * dm^2),$$

$$L = Li * \pi * dm / di$$

und näherungsweise unter Vernachlässigung der Wärmeflüsse an den Stirnseiten bei einer praxisnahen Temperaturverteilung

$$D = 0,4 * (Li/Lm) * s^2 / (dm * di).$$

Entwicklungsziel ist, den Dämpfungsfaktor zu minimieren. Wenn sich die Länge der Meßstrecke verdoppelt, muß z.B. die Dicke des Isolierstoffes oder der Querschnitt des Meßfühlers vervierfacht werden, um den Dämpfungsfaktor konstant zu halten. Es werden Dämpfungsfaktoren unterhalb von etwa 0,3 angestrebt.

Für einen 20 cm langen und 2 cm dicken Rundstab aus Kupfer (Wärmeleitung 370 W/mK), beschichtet mit 0,5 cm Rohazell (Wärmeleitung 0,35 W/mK) ergibt sich beispielsweise eine praktisch ausreichend kleine Dämpfung von 0,15, d.h. bei einer Differenz der Extremtemperaturen außerhalb des Meßkörpers von 20 K beträgt die Differenz der innerhalb des Meßkörpers herrschenden Maximal- bzw. Minimaltemperatur nur 3 K. Diese Temperaturungenauigkeit kann toleriert werden, wenn die Energiezufuhr bei einer Temperatur von z.B. 85°C unterbrochen werden soll.

Der Meßkörper kann auch die Form eines Ringes haben oder die Kombination eines oder mehrerer Ringe mit einem oder mehreren Stäben darstellen. Er kann auch mehrere, die Röntgenröhre 2 umgreifende Arme aufweisen, die nach Art einer Spinne in einem Punkt zusammengeführt sind. Wesentlich ist bei diesen unterschiedlichen Formgebungen lediglich, daß der Meßkörper über die Zone des Raumes 3 ausgedehnt ist, deren Temperatur-Mittelwert überwacht werden soll.

Der Meßkörper kann auch außerhalb des Gehäuses in unmittelbarem thermischen Kontakt mit dem Gehäuse angeordnet sein. Da die Gehäusewände verhältnismäßig dünn sind, ergibt sich auch entlang der Gehäusewand ein Temperaturgefälle, aus dem mit Hilfe des Meßkörpers ein einheitlicher Temperaturwert abgeleitet werden kann. Dabei muß dafür gesorgt werden, daß der Wärmeaustausch des Meßkörpers mit der Umgebung außerhalb des Röntgenstrahlers möglichst gering bleibt.

Als weitere Ausführungsform wäre auch als Meßfühler eine langgestreckte Heat Pipe geeignet, die bei geeigneter Auslegung ihren Arbeitspunkt in der Nähe der Abschalttemperatur (z.B. 85°C) hat und für eine Nivellierung der inneren Temperaturverteilung sorgt.

**Patentansprüche**

1. Röntgenstrahler mit einem Gehäuse, einer darin angeordneten, von einem flüssigen Isoliermedium umgebenen Röntgenröhre und mit einem Temperaturfühler zur Bestimmung der Temperatur in dem flüssigen Isoliermedium,
   dadurch gekennzeichnet, daß der Temperaturfühler einen Meßkörper (6), der mit einer räumlich ausgedehnten Zone im Isoliermedium thermischen Kontakt hat und im Betrieb des Röntgenstrahlers (2) eine von der Temperaturverteilung in der Zone abhängige einheitliche Temperatur annimmt, und einen mit dem Meßkörper thermisch gekoppelten Temperaturwandler (5) umfaßt, der ein von der Temperatur des Meßkörpers abhängiges elektrisches Signal erzeugt.

**2.** Röntgenstrahler nach Anspruch 1, <u>dadurch gekennzeichnet</u>, daß der Meßkörper im Innern (3) des Gehäuses (1) angeordnet ist und mit dem Isoliermedium direkten thermischen Kontakt hat.

**3.** Röntgenstrahler nach Anspruch 1 oder 2, <u>dadurch gekennzeichnet</u>, daß der Meßkörper einen massiven Metallkörper (61) umfaßt, dessen Oberfläche von einer thermisch isolierenden Hülle (62) umschlossen ist.

## Claims

**1.** An X-ray source, comprising a housing, an X-ray tube which is accommodated therein and is surrounded by a liquid insulating medium, and a temperature sensor for determining the temperature in the liquid insulating medium, <u>characterized in that</u> the temperature sensor comprises a measuring element (6) which is in thermal contact with a large spatial zone in the insulating medium and assumes a uniform temperature which is dependent on the temperature distribution in the zone during operation of the X-ray source (2), and also comprises a temperature transducer (5) which is thermally coupled to the measuring element and generates an electric signal which is dependent on the temperature of the measuring element.

**2.** An X-ray source as claimed in Claim 1, <u>characterized in that</u> the measuring element is arranged in the interior (3) of the housing (1) and is in direct thermal contact with the insulating medium.

**3.** An X-ray source as claimed in Claim 1 or 2, <u>characterized in that</u> the measuring element comprises a solid metal body (61) whose surface is enclosed by a thermally insulating sleeve (62).

## Revendications

**1.** Emetteur de rayons X avec un boîtier, un tube à rayons X disposé à l'intérieur de celui-ci et entouré d'un milieu isolant liquide et un capteur de température en vue de déterminer la température dans le milieu isolant liquide,

<u>caractérisé en ce</u> que le capteur de température comprend un corps de mesure (6) qui est en contact thermique avec une zone étendue spatialement dans le milieu isolant et adopte, lorsque l'émetteur de rayons X (2) est en service, une température uniforme dépendant de la distribution de la température dans la zone et un convertisseur de température (5) couplé thermiquement au corps de mesure qui produit un signal électrique dépendant de la température du corps de mesure.

**2.** Emetteur de rayons X selon la revendication 1 <u>caractérisé en ce</u> que le corps de mesure est disposé à l'intérieur (3) du boîtier (1) et est en contact thermique direct avec le milieu isolant.

**3.** Emetteur de rayons X selon l'une des revendications 1 ou 2, <u>caractérisé en ce</u> que le corps de mesure comprend un corps métallique massif (61) dont la surface est entourée par une gaine (62) isolante thermiquement.